# EUROPÄISCHE PATENTSCHRIFT

(11) **EP 3 981 817 B1**
(45) Veröffentlichungstag und Bekanntmachung des Hinweises auf die Patenterteilung: **10.09.2025**
(21) Anmeldenummer: 20201282.9
(22) Anmeldetag: 12.10.2020
(51) Int. Cl.: C08G 59/50, C08G 59/68

(54) **ZUSAMMENSETZUNGEN UMFASSEND BRÖNSTEDTSÄUREN UND MONOAMINE**
COMPOSITIONS COMPRISING BRONSTED ACIDS AND MONOAMINES
COMPOSITIONS COMPRENANT DES ACIDES DE BRØNSTED ET DE LA MONOAMINE

(43) Veröffentlichungstag der Anmeldung: 13.04.2022
(73) Patentinhaber: Evonik Operations GmbH, 45128 Essen (DE)
(72) Erfinder: Spyrou, Emmanouil, 46514 Schermbeck (DE); Loesch, Holger, 44627 Herne (DE); Thesing, Andrea, 48683 Ahaus (DE); Diesveld, Andrea, 48712 Gescher (DE); Kreischer, Susanne, 45701 Herten (DE)
(74) Vertreter: Evonik Patent Association

(56) Entgegenhaltungen:
- EP-A1- 2 957 584
- EP-A1- 3 569 630
- EP-A1- 3 626 757

## Beschreibung

Die vorliegende Erfindung betrifft Zusammensetzungen enthaltend starke Brönstedtsäuren, Verfahren zu ihrer Herstellung und ihre Verwendung. Da sich die erfindungsgemäßen Zusammensetzungen besonders gut als Katalysatorzusammensetzungen, insbesondere für die Härtung von Epoxidharzen, eignen, sind Gegenstand der vorliegenden Erfindung auch Katalysatorzubereitungen enthaltend starke Brönstedtsäuren.

Epoxidharze, insbesondere solche, die aus Bisphenol A und Epichlorhydrin hergestellt werden, sind bekannte Rohstoffe für die Herstellung von qualitativ hochwertigen Gießharzen, Beschichtungsmassen, Kompositen und Klebstoffen. Mit Polyaminen gehärtete aromatische Epoxidharze besitzen neben guter Chemikalien- und Lösungsmittelbeständigkeit eine gute Haftfestigkeit auf vielen Untergründen.

Zur Beschleunigung der Härtung von Epoxy-Amin-Beschichtungssystemen können Katalysatoren eingesetzt werden (US 3,492,269 A, US 5,470,896 A, GB 1,105,772 A).

EP 0 083 813 A1, EP 2 957 584 A1, US 5,441,000 A, US 5,629,380 A, WO 96/09352 A1 offenbaren die katalysierte Härtung von Epoxyharzen mit verschiedenen Aminen.

US 8,980,979 B2 offenbart die Härtung eines Epoxyharzes mit u.a. einem cyclischen Diamin ausgewählt aus Piperazin oder Homopiperazin ggf. in Gegenwart eines Katalysators.

EP 0 969 030 A1 offenbart Epoxy/Amin-Beschichtungssysteme, deren Aminkomponente ein aliphatisches Amin ist. Die Zusammensetzungen können einen Katalysator aufweisen.

US 4,775,734 A offenbart die Härtung von Epoxyharzen mit Aminoethylpiperazin unter Verwendung katalytischer Mengen von Tetrafluoroborat- oder Hexafluorophosphat-Salzen verschiedener Amine. In Vergleichsbeispielen (Beispiel 2) wird weiterhin der Versuch der Härtung von Epoxyharzen mit Aminoethylpiperazin in Gegenwart von Lithiumtetrafluoroborat offenbart. Bei dem eingesetzten Verhältnis von Epoxygruppen : NH-Gruppen erfolgt jedoch keine Umsetzung. Ein weiteres Beispiel (Beispiel 14) offenbart die Umsetzung von Ammoniumhexafluorophosphat mit Diethylamin.

US 5,134,239 A offenbart Addukte aus heterocyclischen Stickstoff-haltigen Verbindungen und Salzen. Beispiel 58 offenbart als nicht erfindungsgemäßes Beispiel die Synthese eines Butylamin-Tetrabutylphosphoniumfluoroborat-Komplexes in methanolischer Lösung.

WO 2017/074810 A1 offenbart Zusammensetzungen umfassend ein Epoxyharz, ein Polyetheramin und einen weiteren Aminhärter, bei dem es sich unter anderem um ein aliphatisches Amin handeln kann, sowie optional einen Metalltriflat-Katalysator.

Die Anmeldungen EP 3 569 629 A1, EP 3 569 630 A1, EP 3 569 631 A1 und EP 3 569 632 A1 offenbaren Zusammensetzungen umfassend mindestens ein Epoxyharz, mindestens ein cyclisches Amin mit mindestens zwei Aminogruppen und mindestens ein Salz einer Brönstedtsäure.

Es ist wünschenswert, die Härtung von Epoxyformulierungen mit Katalysatoren zu beschleunigen, um Energie und Reaktionszeit einsparen zu können. Als besonders geeignet haben sich Salze starker Brönstedtsäuren (d.h. solche mit einem pKs-Wert kleiner oder gleich 2), insbesondere Salze sehr starker Brönstedtsäuren (d.h. solche mit einem pKs-Wert kleiner oder gleich -9,01) herausgestellt. Ihr Nachteil ist jedoch, dass es sich bei Ihnen um Feststoffe handelt und dass sie sich nur schwer in den flüssigen Epoxidformulierungen homogenisieren lassen. Auch eine vorherige Lösung oder Dispergierung in Lösemittel ist nachteilig - im Falle einer Dispergierung oder Lösung der Katalysatoren in inerten Lösemitteln wird dadurch der VOC (volatile organic content)-Anteil der Epoxyzusammensetzungen erhöht. Reaktive Lösemittel führen dagegen zu Ausfällungen, Verfärbungen und Reaktivitätsminderung.

Es ist somit die Aufgabe der vorliegenden Erfindung, Zusammensetzungen bereitzustellen, die die als Katalysatoren von Epoxyformulierungen sehr gut geeigneten Salze starker Brönstedtsäuren enthalten und die die vorgenannten Nachteile nicht aufweisen.

Überraschenderweise wurde gefunden, dass sich Salze starker bzw. sehr starker Brönstedtsäuren, insbesondere Salze der Trifluormethansulfonsäure (Triflate) in primären aliphatischen Monoaminen gut lösen. Dabei wurde überraschenderweise festgestellt, dass primäre aliphatische Monoamine die genannten Salze weitaus besser lösen als sekundäre aliphatische Monoamine oder andere Monoamine.

Gegenstand der vorliegenden Erfindung sind somit Zusammensetzungen bestehend aus a) mindestens einem Metall-, Ammonium- oder Phosphoniumsalz eine Brönstedt-Säure mit einem pKs-Wert von kleiner oder gleich 2 und b) mindestens einem primären aliphatischen Monoamin, wobei die Zusammensetzungen 10 - 95 Gew.-% Komponente a) und 5 - 90 Gew.-% Komponente b), bezogen auf die Einwaagen der Komponenten a) und b) aufweisen. Weiter bevorzugt weisen die Zusammensetzungen 30 - 70 Gew.-% Komponente a) und 70-30 Gew.-% Komponente b), bezogen auf die Einwaagen der Komponenten a) und b) auf, noch weiter bevorzugt 40 - 60 Gew.-% Komponente a) und 60 - 40 Gew.-% Komponente b), bezogen auf die Einwaagen der Komponenten a) und b) auf.

Die erfindungsgemäßen Zusammensetzungen enthalten mindestens ein Metall-, Ammonium- oder Phosphoniumsalz einer starken Brönstedt-Säure. Entsprechende Salze sind gute Katalysatoren. Unter einer solchen starken Säure ist vorliegend eine Säure zu verstehen, deren pKs-Wert (bzw. im Falle mehrprotoniger Säuren deren pKs-Wert der ersten Protolysationsstufe) kleiner oder gleich 2 ist. Bevorzugt ist der pKs der korrespondierenden Säure kleiner oder gleich -2.

Der pKs ist definiert als der negative dekadische Logarithmus der Gleichgewichtskonstante Ks und gilt als Maß für die Stärke einer Säure. Je kleiner ein pKs-Wert, desto stärker die Säure. Der pKₛ-Wert wird bestimmt wie in F.G. Bordwell, "Equilibrium Acidities in Dimethylsulfoxide Solution", Acc. Chem. Res. 1988, 21, 456-463 offenbart.

Bevorzugte Salze sind die entsprechenden Salze der in der folgenden Tabelle 1 in der ersten Spalte zusammengefassten starken Säuren:

**Tabelle 1:**

| Säure | pKₛ-Wert | Literaturstelle, falls nicht in Bordwell offenbart |
|---|---|---|
| Oxalsäure | 1,5 | Bayer Walter, Lehrbuch der organischen Chemie, 21. Auflage, Hirzelverlag 1988, S. 324 |
| p-Toluolsulfonsäure | 0,7 | Römpp Lexikon Chemie, 10. Auflage, Georg Thieme Verlag, Stuttgart, New York, Verlag 1999, S. 4580-1. |
| Trifluoressigsäure | 0,2 | Bayer Walter, Lehrbuch der organischen Chemie, 21. Auflage, Hirzelverlag 1988, S. 272 |
| Tetrafluorborsäure | -0,4 | e-EROS Encyclopedia of Reagents for Organic Synthesis, Pages1-4, Conference; General Review; Online Computer File, 2001 |
| Salpetersäure | -1,4 | Hollemann Wiberg, Lehrbuch der anorganischen Chemie, 91.-100 Auflage, Walter der Gruyter Verlag, Berlin, New York, 1985, S. 603. |
| Schwefelsäure | -3 | Römpp, Lexikon Chemie, 9. Auflage, Georg Thieme Verlag, Stuttgart, New York 1991, S. 3459. |
| Salzsäure | -8 | |
| Bromwasserstoffsäure | -9 | |
| Perchlorsäure | -10 | Hollemann Wiberg, Lehrbuch der anorganischen Chemie, 91.-100 Auflage, Walter der Gruyter Verlag, Berlin, New York, 1985, S. 428 |
| Trifluormethansulfonsäure | -14 | |
| lodwasserstoff | -9,5 | Journal of Physical Chemistry A, Volume 120, Issue 20, Pages 3663-3669. |
| Hexafluorophosphorsäure | -10 | http://www.periodensystem-online.de/index.php?sel=wertdesc&prop=pKs-Werte&show=list&id=acid |
| Hexafluoroantimonsäure | -17 | http://www.periodensystem-online.de/index.php?sel=wertdesc&prop=pKs-Werte&show=list&id=acid |

Bevorzugt handelt es sich bei dem Salz um das Salz einer sehr starken Säure, wobei unter einer solchen sehr starken Säure vorliegend eine Säure zu verstehen, deren pKs-Wert (bzw. im Falle mehrprotoniger Säuren deren pKs-Wert der ersten Protolysationsstufe) kleiner oder gleich -9,01 ist. Bevorzugt ist der pKs-Wert der sehr starken Säure zwischen -9,5 und -25, besonders bevorzugt zwischen -9,9 und -21.

Ganz besonders bevorzugt ist die Komponente a) ein Salz einer Brönstedtsäure ausgewählt aus Perchlorsäure, Trifluormethansulfonsäure, lodwasserstoff, Hexafluorphosphorsäure und Hexafluorantimonsäure.

Noch weiter bevorzugt ist das Salz ein Triflat, d.h. ein Salz der Trifluormethansulfonsäure.

Bei den starken Brönstedtsalzen handelt es sich um Metall-, Ammonium- oder Phosphoniumsalze. Unter Metallsalzen sind dabei sowohl Salze enthaltend Metallionen (d.h. aufweisend mindestens ein von mindestens einem Metall abgeleiteten Ion, bevorzugt aufweisend ein von mindestens einem Metallatom abgeleiteten Ion, besonders bevorzugt aufweisend genau ein von mindestens einem Metallatom abgeleiteten Ion) als auch Metall-haltige (d.h. auch nicht-metallische Anteile aufweisende) Ionen zu verstehen. Die Gegenionen der genannten Säuren sind somit ausgewählt aus Metallionen, Metall-haltigen Ionen, Phosphoniumionen und Ammoniumionen.

Bevorzugte Metallionen sind Erdalkalimetallkationen, insbesondere Beryllium-, Magnesium-, Calcium-, Strontium- und Barium-Ionen, sowie Lithium, Aluminium-, Bismut-, Zink- und Europiumionen.

Metall-haltige Ionen sind Ionen, die mindestens ein Metall enthalten, aber keine reinen Metallionen sind. Bevorzugt handelt es sich um Metallverbindungsionen, wie z. B. Tetraphenylstiboniumionen.

Ammoniumionen können unsubstituiert (= NH₄⁺), alkyliert und/oder aryliert sein. Phosphoniumionen können unsubstituiert (= PH₄⁺), alkyliert und/oder aryliert sein. Bevorzugtes Ammoniumion ist NH₄⁺. Bevorzugtes Phosphoniumion ist PH₄⁺. Ganz besonders bevorzugt sind Ammoniumionen.

Bevorzugte Salze starker Säuren sind Calciumtriflat, Europiumtriflat, Bariumtriflat, Aluminiumtriflat, Bismuttriflat, Lithiumtriflat, Lithiumperchlorat, Bariumperchlorat, Lithiumhexafluorophosphat und Zinkperchlorat. Ganz besonders bevorzugt sind Calciumtriflat, Europiumtriflat, Lithiumhexafluorophosphat und Lithiumperchlorat.

Die besten Ergebnisse werden mit Calciumtriflat erreicht.

Die Zusammensetzungen weisen weiterhin mindestens ein primäres aliphatisches Monoamin auf. Unter einem primären aliphatischen Monoamin ist dabei vorliegend ein primäres Monoamin (d.h. ein Amin mit nur einer primären Aminogruppe) mit ausschließlich aliphatischen, d.h. linearen oder verzweigten Alkylresten, Cycloalkylresten und/oder (Cyclo)Alkylresten zu verstehen. Unter (Cyclo)Alkylresten sind dabei Reste mit sowohl cyclischen als auch linearen bzw. verzweigten Alkylanteilen zu verstehen. Bevorzugte aliphatische Reste weisen jeweils 3 bis 30, besonders bevorzugt 3 bis 10, ganz besonders bevorzugt 3 - 6 Kohlenstoffatome auf. Die Monoamine können durch einen Hydroxyrest auf einem ihrer Alkyl-, Cycloalkyl- und/oder (Cyclo)Alkylreste substituiert sind. Andere Substituenten sind jedoch nicht vorhanden. Bevorzugt sind weiterhin alle aliphatischen Reste des Monoamins unsubstituiert.

Bevorzugt werden Monoamine eingesetzt, die einen Siedepunkt (gemessen bei 1013,25 hPa) von 30 - 300 °C, bevorzugt 30 - 200 °C aufweisen.

Ganz besonders bevorzugt ist das Monoamin ausgewählt aus der Gruppe bestehend aus n-Propylamin, iso-Propylamin, n-Butylamin, iso-Butylamin, sec-Butylamin, tert-Butylamin, n-Pentylamin, n-Hexylamin und Ethanolamin.

Noch weiter bevorzugt ist das Monoamin n-Butylamin.

Die besten Ergebnisse werden erzielt, wenn die Komponente a) Calciumtriflat und die Komponente b) n-Butylamin ist.

Gegenstand der vorliegenden Erfindung ist weiterhin ein Verfahren zur Herstellung der erfindungsgemäßen Zusammensetzung, bei dem a) mindestens ein Metall-, Ammonium- oder Phosphoniumsalz einer starken Brönstedt-Säure und b) mindestens ein aliphatisches Monomin, ggf. in Anwesenheit weiterer Komponenten, miteinander vermischt werden.

Gegenstand der vorliegenden Erfindung ist weiterhin auch die Verwendung einer erfindungsgemäßen Zusammensetzung als Katalysatorzusammensetzung. Besonders eignen sich die erfindungsgemäßen Zusammensetzungen als Katalysatorzusammensetzungen für die Härtung von Epoxidharzen, ganz bevorzugt für die Härtung von Epoxidharzen mit Aminen.

### Beispiele

### Beispiel 1)

Zum Nachweis der besonderen Reaktivität der beanspruchten Katalysatoren werden Modellversuche miteinander verglichen. Dazu gibt man jeweils 0,025 Mol (3,75 g) des 1,2-Epoxy-3-phenoxypropans in eine Mischung aus 22,7 g Toluol (Lösemittel) und 2,08 g Tetradecan (interner Standard). Dazu werden 0,025 Mol (2,13 g) Piperidin zugegeben und 0,06 g des Calciumtriflats gelöst in der gleichen Menge Amin bzw. Alkohol als Vergleich. Sofort nach der Mischung wird ein GC angefertigt und der Gehalt an 1,2-Epoxy-3-phenoxypropan mit dem Gehalt des Tetradecans verglichen. Nach 4 h bei Raumtemperatur (RT) wird mittels einer GC-Untersuchung der Restgehalt an 1,2-Epoxy-3-phenoxypropan (EP) ermittelt (kalibriert durch den internen Standard Tetradecan). Dabei ergeben sich folgende Resultate:

### Vergleich der Katalysatoren

| | **Amin bzw. Alkohol** | **Rest % EP in der 0-Probe** | **Rest % EP nach 4 Stunden bei RT** |
|---|---|---|---|
| 1 | Kein Amin bzw. Alkohol | 97 | 0 |
| 2 | Butylamin | 78 | 3 |
| 3 | Hexylamin | 75 | 4 |
| 4 | Octylamin | 76 | 4 |
| 5 | 3-Methylpropylamin | 83 | 4 |
| 6 | 2-Ethylhexylamin | 78 | 5 |
| 7 | 2-Ethylpropylamin | 85 | 6 |
| 8 | n-Pentylamin | 77 | 2 |
| 9 | Ethanolamin | 78 | 8 |
| Vgl.1 | Ethanol | 89 | 32 |
| Vgl. 2 | Ethylenglycol | 89 | 32 |
| Vgl. 3 | Propandiol | 86 | 46 |
| Vgl. 4 | Butandiol | 96 | 31 |
| Vgl. 5 | Ethylendiamin | 90 | 33 |

Die beanspruchten Monoamine eignen sich als Lösemittel für Calciumtriflat und führen zu keiner nennenswerten Abnahme der Reaktivität (Rest EP-Gehalt nach 4 Stunden maximal 10%). Reine Alkohole, Dialkohole oder Diamine führen demgegenüber zu einer deutlichen Abnahme der Reaktivität.

## Patentansprüche

1. Zusammensetzung bestehend aus
a) mindestens einem Metall-, Ammonium- oder Phosphoniumsalz einer Brönstedt-Säure mit einem pKₛ-Wert von kleiner oder gleich 2 und
b) mindestens einem primären aliphatischen Monoamin,
wobei die Zusammensetzungen 10 - 95 Gew.-% Komponente a) und 5 - 90 Gew.-% Komponente b), bezogen auf die Einwaagen der Komponenten a) und b), aufweisen.

2. Zusammensetzung nach Anspruch 1,
**dadurch gekennzeichnet, dass**
das Salz a) ein Salz einer Säure ausgewählt aus der Gruppe bestehend aus Oxalsäure, p-Toluolsulfonsäure, Trifluoressigsäure, Tetrafluorborsäure, Salpetersäure, Schwefelsäure, Salzsäure, Bromwasserstoffsäure, Perchlorsäure, Trifluormethansulfonsäure, lodwasserstoff, Hexafluorphosphorsäure und Hexafluorantimonsäure ist.

3. Zusammensetzung nach einem der vorhergehenden Ansprüche,
**dadurch gekennzeichnet, dass**
die Brönstedt-Säure einen pKₛ-Wert von kleiner oder gleich -9,01 aufweist.

4. Zusammensetzung nach einem der vorhergehenden Ansprüche,
**dadurch gekennzeichnet, dass**
das Monoamin b) ausschließlich aliphatische Reste mit 3 - 30 Kohlenstoffatome aufweist.

5. Zusammensetzung nach einem der vorhergehenden Ansprüche,
**dadurch gekennzeichnet, dass**
dass das Monoamin b) einen Siedepunkt, gemessen bei 1013,25 hPa, von 30 - 300 °C, aufweist.

6. Zusammensetzung nach einem der vorhergehenden Ansprüche,
**dadurch gekennzeichnet, dass**
das Amin b) ausgewählt wird aus der Gruppe bestehend aus n-Propylamin, iso-Propylamin, n-Butylamin, iso-Butylamin, sec-Butylamin, tert-Butylamin, n-Pentylamin, n-Hexylamin und Ethanolamin.

7. Zusammensetzung nach einem der vorhergehenden Ansprüche,
**dadurch gekennzeichnet, dass**
das Salz a) der Brönstedt-Säure Calciumtriflat und das Monoamin b) n-Butylamin ist.

8. Verfahren zur Herstellung der einer Zusammensetzung nach einem der Ansprüche 1 - 7, bei dem a) mindestens ein Metall-, Ammonium- oder Phosphoniumsalz einer Brönstedt-Säure mit einem pKₛ-Wert von kleiner oder gleich 2 und b) mindestens ein primäres aliphatisches Monomin miteinander vermischt werden.

9. Verwendung einer Zusammensetzung nach einem der Ansprüche 1 - 7 als Katalysatorzusammensetzung.

10. Verwendung einer Zusammensetzung nach Anspruch 9 als Katalysatorzusammensetzung für die Härtung von Epoxidharzen.

## Claims

1. Composition consisting of
a) at least one metal salt, ammonium salt or phosphonium salt of a Brønsted acid having a pK_{A} not higher than 2 and
b) at least one primary aliphatic monoamine,
wherein the compositions have 10-95% by weight of component a) and 5-90% by weight of component b), based on the weights of components a) and b).

2. Composition according to Claim 1,
**characterized in that**
the salt a) is a salt of an acid selected from the group consisting of oxalic acid, p-toluenesulfonic acid, trifluoroacetic acid, tetrafluoroboric acid, nitric acid, sulfuric acid, hydrochloric acid, hydrobromic acid, perchloric acid, trifluoromethanesulfonic acid, hydrogen iodide, hexafluorophosphoric acid and hexafluoroantimonic acid.

3. Composition according to either of the preceding claims,
**characterized in that**
the Brønsted acid has a pK_{A} not higher than -9.01.

4. Composition according to any of the preceding claims,
**characterized in that**
the monoamine b) has exclusively aliphatic radicals having 3-30 carbon atoms.

5. Composition according to any of the preceding claims,
**characterized in that**
the monoamine b) has a boiling point, measured at 1013.25 hPa, of 30-300°C.

6. Composition according to any of the preceding claims,
**characterized in that**
the amine b) is selected from the group consisting of n-propylamine, isopropylamine, n-butylamine, isobutylamine, sec-butylamine, tert-butylamine, n-pentylamine, n-hexylamine and ethanolamine.

7. Composition according to any of the preceding claims,
**characterized in that**
the salt a) of the Brønsted acid is calcium triflate and monoamine b) is n-butylamine.

8. Process for preparing a composition according to any of Claims 1-7, in which a) at least one metal salt, ammonium salt or phosphonium salt of a Brønsted acid having a pK_{A} not higher than 2 and b) at least one primary aliphatic monoamine are mixed with one another.

9. Use of a composition according to any of Claims 1-7 as catalyst composition.

10. Use of a composition according to Claim 9 as catalyst composition for the curing of epoxy resins.

## Revendications

1. Composition constituée par
a) au moins un sel de métal, d'ammonium ou de phosphonium d'un acide de Brönstedt ayant un pKₛ inférieur ou égal à 2 ; et
b) au moins une monoamine aliphatique primaire,
les compositions présentant 10 à 95 % en poids de composant a) et 5 à 90 % en poids de composant b), par rapport aux pesées des composants a) et b).

2. Composition selon la revendication 1,
**caractérisée en ce que**
le sel a) est un sel d'un acide choisi dans le groupe constitué par l'acide oxalique, l'acide p-toluènesulfonique, l'acide trifluoroacétique, l'acide tétrafluoroborique, l'acide nitrique, l'acide sulfurique, l'acide chlorhydrique, l'acide bromhydrique, l'acide perchlorique, l'acide trifluorométhanesulfonique, l'acide iodhydrique, l'acide hexafluorophosphorique et l'acide hexafluorantimonique.

3. Composition selon l'une quelconque des revendications précédentes,
**caractérisée en ce que**
l'acide de Brönstedt présente un pKₛ inférieur ou égal à -9,01.

4. Composition selon l'une quelconque des revendications précédentes,
**caractérisée en ce que**
la monoamine b) présente exclusivement des radicaux aliphatiques de 3 à 30 atomes de carbone.

5. Composition selon l'une quelconque des revendications précédentes,
**caractérisée en ce que**
la monoamine b) présente un point d'ébullition, mesuré à 1013,25 hPa, de 30 à 300 °C.

6. Composition selon l'une quelconque des revendications précédentes,
**caractérisée en ce que**
l'amine b) est choisie dans le groupe constitué par la n-propylamine, l'iso-propylamine, la n-butylamine, l'iso-butylamine, la sec-butylamine, la tert-butylamine, la n-pentylamine, la n-hexylamine et l'éthanolamine.

7. Composition selon l'une quelconque des revendications précédentes,
**caractérisée en ce que**
le sel a) de l'acide de Brönstedt est le triflate de calcium et la monoamine b) est la n-butylamine.

8. Procédé de préparation d'une composition selon l'une quelconque des revendications 1 à 7, dans lequel a) au moins un sel de métal, d'ammonium ou de phosphonium d'un acide de Brönstedt ayant un pKₛ inférieur ou égal à 2 et b) au moins une monoamine aliphatique primaire sont mélangés l'un avec l'autre.

9. Utilisation d'une composition selon l'une quelconque des revendications 1 à 7 en tant que composition de catalyseur.

10. Utilisation d'une composition selon la revendication 9 comme composition de catalyseur pour le durcissement de résines époxy.
